Europäisches Patentamt

European Patent Office

Office européen des brevets

(11) Publication number: **0 114 154**
**B1**

(12) **EUROPEAN PATENT SPECIFICATION**

(45) Date of publication of patent specification: **28.09.88**

(21) Application number: **84850012.0**

(22) Date of filing: **12.01.84**

(51) Int. Cl.⁴: **F 41 H 3/02**

(54) **Thermal camouflage.**

(30) Priority: **14.01.83 SE 8300174**

(43) Date of publication of application:
**25.07.84 Bulletin 84/30**

(45) Publication of the grant of the patent:
**28.09.88 Bulletin 88/39**

(84) Designated Contracting States:
**AT DE NL**

(56) References cited:
**DE-A-2 016 404**
**DE-A-2 252 431**
**FR-A-2 220 056**
**FR-A-2 442 422**
**GB-A-1 605 131**
**GB-A-2 026 660**

(73) Proprietor: **DIAB-BARRACUDA AB**
**S-59400 Gamleby (SE)**

(72) Inventor: **Karlsson, Lars**
**Nejlikevägen 10**
**S-59400 Gamleby (SE)**
Inventor: **Wallin, Erik W.**
**Ugglevägen 6**
**S-59400 Gamleby (SE)**

(74) Representative: **Grennberg, Erik Bertil et al**
**H ALBIHNS PATENTBYRA AB Box 7664**
**S-103 94 Stockholm (SE)**

Courier Press, Leamington Spa, England.

## Description

The invention relates to a thermal camouflage as recited in the preamble of claim 1.

A thermal camouflage of this type is known from FR—A—2 442 422. This publication discloses many embodiments of thermal camouflage comprising a metallic reflective layer with one or more covering layers thereon. The primary object of the metal layer is to improve the camouflage especially as concerns infrared detection, reducing or totally stopping transmission of electromagnetic radiation emitted from camouflaged objects.

This is all very well, but a warm object which is camouflaged by means of such known camouflage may still heat the camouflage. The structure and contours will be impossible to observe, but the high temperature of a surface will be clearly apparent even so.

The object of the invention is to improve a camouflage of the mentioned type, such that infrared reconnaissance building on the detection of temperature differences will be rendered more difficult, while retaining good optical camouflage effect and good radar camouflage effect.

Infrared reconnaissance is a military scouting method where large practical advances have been made lately, which makes it necessary now to provide good counter-measures. What has been proposed so far in this direction has above all been double-layered structures of the type where two fabrics have been kept spaced from each other so that the outer layer has been insulated from the inner one. The outer layer does indeed obtain thermal energy from the outside, but in its thermal equilibrium it will even so be heavily affected by the outside surrounding nature which has the prevailing air temperature, and partly by outer space, at least in clear weather, which has a very low temperature.

Such a double structure is not particularly practicable in field conditions, and it is therefore one of the objects of the invention to provide a thermal camouflage which is easy to lay out, which may be folded in about the same way as a tarpaulin and which is easy to transport, but still gives good masking effect against infrared reconnaissance.

The infrared spectrum is distinguished in that large sections thereof are heavy absorbed in air, except in certain wavelength intervals. In reconnaissance at distances over a couple of kilometers there are thus only two wavelengths bands of interest at present, namely 3—5 µm and 8—14 µm. The latter range affords the greatest difficulties since the detector in a reconnaissance system must be cooled very heavily, in many cases by liquid helium (4.2 K). In the 3—5 µm range already, cooling with liquid nitrogen (77 K) is required as a rule.

In accordance with the present invention, instead of conventional insulation of the observed outer layer there is used a combination of a reflecting surface without notable specular reflection which reflects heat radiation coming from the outside, and on the outside of the reflecting surface a layer with a low self-emission factor. This low factor is achieved by selecting a plastics material with high transmissivity in the spectrum range in question.

The objects and advantages of the present invention are therefore obtained by providing a thermal camouflage as of the mentioned type, which presents the features of the characterizing clause of claim 1.

An unbroken metallic layer, although useful for the purpose of infrared camouflage, would be prone to reflect radar radiation, and is therefore broken up into a mosaic, e.g. by a rolling operation performed in the course of lamination.

In order to avoid glaring, the outer layer is matt-finished, e.g. by the prior art method of laminating against a carrier having a matted surface, which carrier is subsequently removed.

Most important for resolving the inventive problem is, however, the putting on top of the reflecting layer of a plastics material which has high transmissivity in the wavelength ranges (3—5 µm and 8—14 µm, i.e. corresponding to the IR transmitting "windows" of air.

A suitable plastics material is polyethylene which is coloured all the way through with low-absorbing camouflage pigment for giving visible camouflage effect.

It is suitable to use a polyethylene film which is provided with a vaporized aluminium coating, this film being laminated together with the strengthening layer by means of a fusion adhesive layer. If a structured roll is used, or an opposing web of matt-enamelled viscous weave which is stripped off after lamination, a matt surface is obtained on the polyethylene film. Furthermore, the aluminium coating will be broken up during rolling into a kind of three-dimensional mosaic form, so that specular reflection in the infrared range as well as in the radar wavelength range will be avoided.

The emission factor can be put at 0.6—0.8, depending on material and thickness. In accordance with a preferred embodiment there is arranged different layer thicknesses of the plastics during lamination. This can be provided by applying patches of different sizes and shapes (which can have different colours in the visible range). Another method is to lay a partially perforated film above the metal-coated plastics layer, immediately before the laminating roll nip. A variegated effect is thus obtained in an infrared picture, depending on different emission factors, so that the range which actually does have the same temperature appears to have completely different temperatures, and that there may be varying equilibrium temperatures.

A further possibility for differentiating the temperatures can be achieved by ventilation openings in certain zones in the fabric. Both cooling and heating in different zones is thus effected by wind and convection. The ventilation openings should however have a rather small area. In accordance with a particular embodiment, which is made the subject of applicants' own cofiled patent application, there is utilized the fact that a heat-laminated film of polyethylene will have stresses. If open slits, e.g. incomplete circular slits, are made in such a film there will be openings since the partially attached flaps over the holes curl outwards, the covering effect at right angles to the surface not being diminished so much, but the possibility of tangential through-flow is increased very heavily. There is further achieved a three-dimensional surface which is good for masking effect in the visible wavelength range.

The thermal camouflage may suitably be supplemented by a fret-cut film layer, e.g. in accordance with the U.S. Patent 3 069 796. As will be apparent from another simultaneously filed patent application, it is suitable to make the fret-cutting with S-shaped slits "hooked into" each other, whereby the artificial foliage only covers about 30%. This three-dimensional foliage, insofar as its emitting equilibrium temperature is concerned, will be substantially determined by the temperature and radiation conditions of the surroundings.

The invention will be described in more detail with reference to the figures which illustrate embodiments of the invention not limiting its scope.

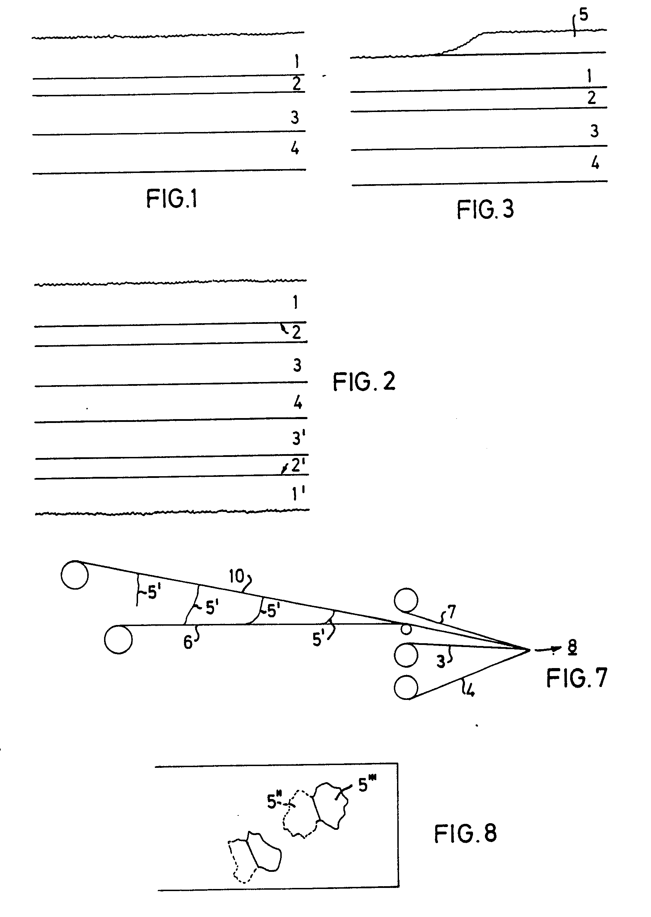

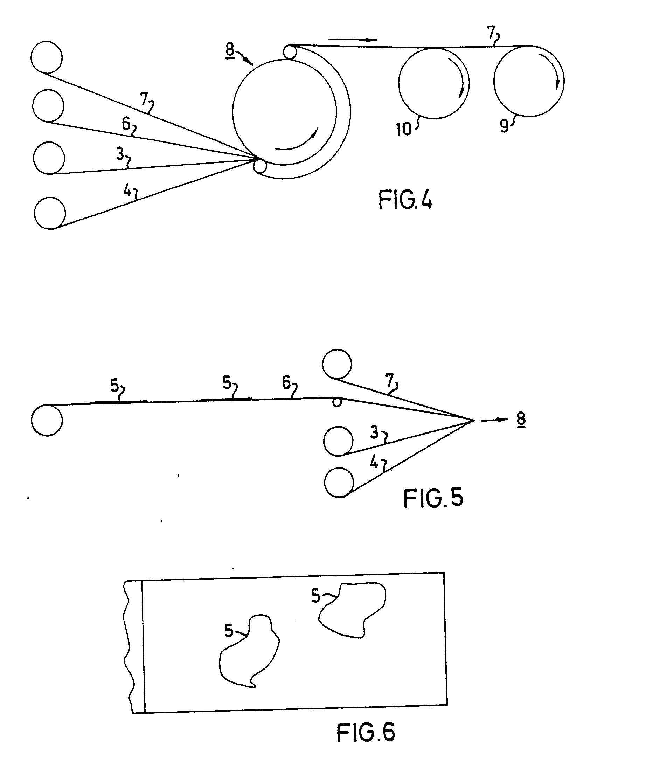

Fig. 1 schematically illustrates a section through an embodiment of a thermal camouflage. Fig. 2 illustrates a second embodiment with coatings on either side of the strengthening layer. Fig. 3 illustrates a third embodiment where the outer layer has, in patches, different thicknesses. Fig. 4 schematically illustrates a laminating operation. Fig. 5 schematically illustrates a modified laminating operation. Fig. 6 illustrates the result of the operation according to Fig. 5. Fig. 7 schematically illustrates a further modified laminating operation, and Fig. 8 illustrates the result thereof.

Fig. 1 illustrates the structure of a first example. Uppermost, for facing outwards, there is a polyethylene layer with a matt surface, and thereinunder a crackled metallic layer 2, an adhesive layer 3 and a strengthening layer 4.

The strengthening layer 4 may be a woven material of polyester or polyamide, and it may contain material effective for radar wavelengths. This layer may also be non-woven or of similar material, or to advantage band-woven from HD polyethylene or polypropylene. Such material gives high tearing strength in relation to its weight, and is thin. It can be coated with thin films of polyethylene or polypropylene, for example.

The adhesive layer 3 may be an adhesive film of the EVA "hot melt" type.

The metallic layer 2 shall reflect within the wavelength range 2—15 µm, and may also be reflecting within other wavelengths as well. Vaporized aluminium coatings over 50 Å give such properties. Thicknesses of 500 Å function well, and such may be obtained from several manufacturers who can deposit them on polyethylene, for example.

The layer 1 is suitably a polyethylene film coloured with a green pigment which has moderate absorption for infrared. This material is usually obtained "blown", i.e. in manufacture it is blown to tubes which are cut up, flattened and rolled up. These films are provided with the metallic deposit 2. This deposit may also be a metal foil, e.g. aluminium, which in such a case must be very thin however in order to be crackled during lamination. Cracking occurs with great reliability, particularly if the strengthening layer 4 is structure, i.e. woven.

A camouflage material is illustrated in Fig. 2, which differs from the one shown in Fig. 1 by it being coated with a laminated adhered layer 2' on the opposite side, and with the adhering layer 3'. There is also metallizing 2'. The camouflage sheet is thus doubly usable. It can either be the same on both sides and thereby turned with either side outwards, or there can be another coating on the underside such as polyvinyl chloride. Another colour can also be fused, e.g. for winter camouflage.

In Fig. 3 there is illustrated an example where the layer 1 is supplemented in patches with a further layer 5' of the same material, possibly differently coloured and which has been attached during the laminating operation.

In Fig. 4 there is illustrated a typical laminating operation. From rolls there are pulled out and laid one on top of the other a carrier 7 (e.g. matted viscose weave), a metallized polyethylene film 6 (corresponding to the layers 1 and 2 in Figs. 1 and 2), a hot melt film 3 and a strengthening layer 4. These layers are taken into a schematically illustrated laminating plant 8 and come out fused together. The finished web is pulled off from the carrier 7 and the final product is rolled up on the roll 10, while the carrier 7 is rolled up on roll 9. The carrier 7 can be used several times.

In Fig. 5 there is illustrated a similar laminating operation with the laminating machine 8 only indicated. In this case, loose patches 5 of the same material, possibly differently coloured, are laid on the polyethylene web 6, and the whole is rolled together to form the structure obtained according to Fig. 3. A plan view of the example shown in Fig. 5 will be seen from Fig. 6. Alternatively, a similar result with less manual work can be obtained according to Fig. 7 by a web 10 being provided with unconnected cuts which form depending flaps when the web is rolled from the supply roller, and these flaps will lay double. A structure is then obtained with two layers on the main portion and, as will be seen from Fig. 8, three layers at places 5'' and only one layer at places 5'''.

Example

In one example there was used a weave having 16×16 threads of polyamide multifilament solid drawn 235 dtex with a superficial weight of 100 g/m². The adhesive layer was Xiro type 240, superficial weight 30 g/m², and the polyethylene layer with a superficial weight of 30 g/m² metallized to 40 µm thickness on one side, the polyethylene being blown LDPE.

## Mechanical properties

Weight 160 g/m$^2$

Tensional strength 700 N for the entire sheet

Tear strength 70 N

Pattern-embossed with repeat length 6 m, repeat width 1.5 m.

Coverage degree is embossed area 8—100%, average value for the whole material 95%.

## Optical properties

Visual: Uniform green with lightness 5.9, colour tone 23.9 and saturation 7.7.

Measured specular reflection at different wavelengths:

| | |
|---|---|
| 360—440 nm | 5.0% |
| 680 nm | 4.5% |
| 750 nm | 9.5% |
| 850 nm | 57% |
| 950 nm | 61% |
| 1200 nm | 67% |

The measured lustre of the surface (Zeiss GP3 1°/4.4°+filter 75° angle) was 0.5%.

## Claims

1. Thermal camouflage, including a covering material with a strengthening layer (4), an outer layer of plastics (1) which is the visible wavelength range has different-coloured areas for visual camouflage effect, and between said strengthening layer and said plastics layer a metal reflection layer (2), characterized in that the outer layer is matt-finished for reducing its specular reflection, that the metal reflection layer is broken up into a mosaic structure for avoiding radar reflection, and that the plastics material of the outer layer (1) has high transmissivity in the wavelength ranges 3—5 µm and 8—14 µm.

2. Thermal camouflage as claimed in Claim 1, characterized in that the plastics material of the outer layer (1) is polyethylene which is coloured through with a camouflage pigment which is low-absorbent in the infrared wavelength range.

3. Thermal camouflage as claimed in Claim 1 or 2, characterized in that the strengthening layer (4) is a weave containing conductive metal wires for radar camouflage effect.

4. Thermal camouflage as claimed in Claim 1, characterized in that the metal reflection layer (2) is laid on the outer layer, and in that an adhesive layer (3) of fusion adhesive joins the strengthening layer (4) to the metallized side of the outer layer (1).

5. Thermal camouflage as claimed in Claim 4, characterized in that on either side of the strengthening layer (4) there is attached an outer layer of plastics (1, 1') with the aid of an adhesive layer (3, 3') of fusion adhesive.

6. Thermal camouflage as claimed in Claim 5, characterized in that the plastics layer on one side is a polyethylene, while on the other side it is PVC.

7. Thermal camouflage as claimed in any one of the preceding claims, characterized in that it is, at least in patches, provided with holes which have a share of 5% in relation to the total surface.

8. Thermal camouflage as claimed in any one of the preceding claims, characterized in that, outside the plastics outer layer, there is attached a sparsely fret-cut plastics material.

## Patentansprüche

1. Wärmetarnung mit einem Abdeckmaterial, das eine Verstärkungslage (4), eine äußere Kunststofflage (1), die im Bereich sichtbarer Wellenlängen mit unterschiedlich gefärbten Zonen zur Erzielung eines Sichttarneffektes versehen ist, und zwischen der Verstärkungslage und der Kunststofflage eine metallische Reflexionslage (2) aufweist, dadurch gekennzeichnet, daß die äußere Lage ein Mattfinish aufweist, um ihre Spiegelreflexion zu verringern, daß die metallische Reflexionslage in eine Mosaikstruktur aufgebrochen ist, um Radarreflexion zu vermeiden, und daß das Kunststoffmaterial der äußeren Lage (1) eine hohe spezifische Durchlässigkeit in Wellenlängenbereichsn von 3—5 µm und 8—14 µm hat.

2. Wärmetarnung nach Anspruch 1, dadurch gekennzeichnet, daß das Kunststoffmaterial der äußeren Lage (1) Polyäthylen ist, das mit einem Tarnfarbstoff durchgefärbt ist, welcher im Infrarot-Wellenlängenbereich geringe Absorptionsfähigkeit hat.

3. Wärmetarnung nach Anspruch 1 oder 2, dadurch gekennzeichnet, daß die Verstärkungslage (4) ein Gewebe ist, das leitende Metalldrähte enthält, um einen Radartarneffekt zu ergeben.

4. Wärmetarnung nac Anspruch 1, dadurch gekennzeichnet, daß die metallische Reflexionslage (2) auf daß äußere Lage aufgebracht ist, und daß eine Klebstofflage (3) aus einem Schmelzkleber die Verstärkungslage (4) mit der metallisierten Seite der äußeren Lage (1) verbindet.

5. Wärmetarnung nach Anspruch 4, dadurch gekennzeichnet, daß auf beiden Seiten der Verstärkungslage (4) eine äußere Lage (1, 1') aus Kunststoff mit Hilfe einer Klebstoffschicht (3, 3') aus einem Schmelzkleber angebracht ist.

6. Wärmetarnung nach Anspruch 5, dadurch gekennzeichnet, daß die Kunststofflage auf der einen Seite aus Polyäthylen ist, wogegen die Kunststofflage auf der anderen Seite aus PVC besteht.

7. Wärmetarnung nach einem der vorhergehenden Ansprüche, dadurch gekennzeichnet, daß sie zumindest in Bereichen mit Löchern versehen ist, die einen Anteil von 5% der Gesamtfläche haben.

8. Wärmetarnung nach einem der vorhergehenden Ansprüche, dadurch gekennzeichnet, daß auf der Außenseite der äußeren Kunststofflage ein in geringem Ausmaß unregelmäßig zugeschittenes Kunststoffmaterial angebracht ist.

## Revendications

1. Camouflage thermique comportant un matériau de couverture constitué d'une couche de renforcement (4), d'une couche externe en matière plastique (1) qui, dans la gamme de longueurs d'ondes visibles, présente des zones de couleurs différentes en vue d'un effet de camouflage visuel et, entre ladite couche de renforcement et ladite couche en matière plastique, d'une couche de réflexion métallique (2), caractérisé en ce que la couche externe a une finition mate destinée à diminuer sa réflexion spéculaire, en ce que la couche de réflexion métallique est morcelée en une structure de mosaïque pour empêcher une réflexion de radar, et en ce que la matière plastique de la couche externe (1) possède une transmissivité élevée dans les gammes de longueurs d'ondes de 3—5 µm et de 8—14 um.

2. Camouflage thermique, tel que défini dans la revendication 1, caractérisé en ce que la matière plastique de la couche externe (1) est un polyéthylène coloré sur la totalité de son épaisseur par un pigment de camouflage faiblement absorbant dans la gamme de longueurs d'ondes infrarouges.

3. Camouflage thermique, tel que défini dans la revendication 1 ou 2, caractérisé en ce que la couche de renforcement (4) est une armure contenant des fils métalliques conducteurs, en vue d'un effect de camouflage radar.

4. Camouflage thermique, tel que défini dans la revendication 1, caractérisé en ce que la couche de réflexion métallique (2) est appliquée sur la couche externe, et en ce qu'une couche adhésive (3) d'un adhésif mis en oeuvre par fusion réunit la couche de renforcement (4) et le côté métallisé de la couche externe (1).

5. Camouflage thermique, tel que défini dans la revendication 4, caractérisé en ce que, de chaque côté de la couche de renforcement (4), on fixe une couche externe en matière plastique (1, 1') à l'aide d'une couche adhésive (3, 3') d'un adhésif mis en oeuvre par fusion.

6. Camouflage thermique, tel que défini dans la revendication 5, caractérisé en ce que la couche en matière plastique consiste, d'un côté, en un polyéthylène, alors que, de l'autre, elle consiste en un PVC.

7. Camouflage thermique, tel que défini dans l'une quelconque des revendications précédentes, caractérisé en ce qu'il comporte, au moins dans des pièces, des trous représentant 5% de la surface totale.

8. Camouflage thermique, tel que défini dans l'une quelconque des revendications précédentes, caractérisé en ce qu'à l'extérieur de la couche externe en matière plastique, on fixe un matériau en matière plastique ajouré par endroits.

FIG.1

FIG. 3

FIG. 2

FIG.7

FIG.8

FIG.4

FIG.5

FIG.6